# EUROPEAN PATENT APPLICATION

(11) **EP 2 628 381 A1**
(43) Date of publication of application: **21.08.2013**
(21) Application number: 13155035.2
(22) Date of filing: 13.02.2013
(51) Int. Cl.: A01G 1/06

(54) **An automatic machine for herbaceous grafting**

(30) Priority: 14.02.2012 IT RE20120009
(71) Applicant: Trea S.A.S. di Carretti Alfeo E C., 42121 Reggio Emilia (IT)
(72) Inventor: Carretti, Alfeo, 42121 Reggio Emilia (IT); Saccani, Manuel, 42121 Reggio Emilia (IT)
(74) Representative: Corradini, Corrado

(57) **Abstract**

An automatic machine (10) for herbaceous grafting which comprises a base (11) supporting at least a device (20) suitable for supporting a rootstock of a plant (P) to be grafted, comprising a support member (27) defining a substantially cylindrical concave portion suitable for receiving a stem of a plant (P) to be grafted and cutting means comprising a blade (L1) suitable for cutting the stem of the plant (P) and actuated in translation by actuating means, characterised in that the blade (L1) is actuated by the actuating means (35), with a translation motion having at least a component that is parallel to the axis of the concave portion (27).

## Description

### TECHNICAL FIELD

The present invention relates in general to plant grafting, and in particular to an automatic machine which enables the graft to be achieved rapidly and effectively.

### PRIOR ART

As is known, grafting is a method used for multiplying plants through the union of the rootstock, that is, the lower part of a first plant that includes the root system, and the scion, i.e. the upper part of a second plant.

The grafting operation is accomplished by coupling the rootstock with a scion, i.e. a part of the graft consisting of a piece of stem, branch or a bud, in order to create a single plant.

Grafting is an agronomic practice widely used in agriculture as it improves plant resistance to disease, sturdiness and especially productivity to be improved.

In a known grafting technique, a cut is made in a plane that is inclined with respect to the longitudinal axis of the stem such as to increase the cutting surface, which will become the surface of contact between two stems, and gain a closer contact between the two cut stems (rootstock and scion). The contact is guaranteed by a special clamp, of known type.

The prior art includes various devices for automatically performing the above-described graft.

The known devices comprise a first clamp for receiving and blocking the stem of the first plant, and a second clamp for receiving and blocking the stem of the second plant.

A blade, or other cutting means, is associated to each of the clamps, and is suitable for severing the stem.

Each of the clamps is associated with mobile means of support suitable for matching the surfaces of the cut stems, so as to realize the graft.

There are known devices in which each clamp is placed on a slide, the two slides being mobile on parallel paths, in such a way that the clamps can place the stems in a first position in which they are parallel and distant, in which the cutting is carried out, and in a second position in which they are aligned and near to one another in such a way that the cut surfaces are placed in mutual contact.

Devices are also known in which each clamp is supported by an arm, and each arm can swing about an axis parallel to the axis of oscillation of the arm bearing the other clamp, between a position in which the stems are parallel and distant and a position in which they are aligned and reciprocally close, with the surfaces of the cut made on the stems placed in reciprocal contact. In known devices the clamps move on different planes, perpendicular to the axis of the stems supported by the clamps.

In all these devices the cutting blades are placed on the same plane located between the planes in which they move the clamps.

The two plants to be grafted are oriented in the same way when positioned on the clamps of the device, i.e. parallel to one another and with the leaves oriented in a same direction. After cutting, the two sections of the stems are facing one another and dealigned in the space between the clamps, and the movement of the clamps aligns the sections, matches the two cut surfaces and places them in contact in the engaged position. The known devices further provide for application, in manual or automatic mode, of a clamp holding the two sections (rootstock and scion) of the stems contactingly together.

There are other known devices, in which only the cutting of the scion and rootstock is automatically carried out; in these cases, the scion and rootstock are supported by the operator and not by appropriate supports.

The known devices have the characteristic that all the mutual movement of the stems and sections takes place in the perpendicular direction to the axis of the stems.

This not only makes the alignment difficult, but also the perfect contact between the cutting surfaces which, being inclined with respect to the axis of the stems, near one another in a direction that is not perpendicular to the plane of the cut.

This causes the two sections, or semi-stems, to be not perfectly aligned, or the cut surfaces to be not fully in contact, to the detriment of the result of the operation.

A second drawback is due to the fact that, in the known devices, the stem is blocked by the clamp at a single point and the cutting blade acts at a certain distance from the clamp. It follows that the axis of the stem is not always in the same position during cutting, but may also be slightly inclined. An incorrect orientation of the stem has the consequence that the cutting is not performed correctly, i.e. with the correct inclination, and in the right position, as the action of the blade tends to flex the stem during cutting. This drawback is more frequent in grafts involving plants having a small-diameter stem.

A further but no less serious drawback of the known devices consists in the fact that the blades can transmit agents harmful to the health of plants, transferring them from one plant to the next.

A still further drawback lies in the fact that these known devices are ineffective for certain types of plants, such as melons, which require different types of graft and which in this case require that the inclined cut in the rootstock, to which the scion is to be associated, is carried out near the top of the stem, in practice by removing one of the leaves at the top of the plant from the rootstock.

This type of graft, commonly known in the sector as a herbaceous graft, is suitable for herbaceous plants of the family Cucurbitaceae, i.e. the melon or like plants, particularly well-grown plants, which between the two main leaves (cotyledons) have two newly-born leaves (suckers), which have to be removed by cutting, since otherwise they would limit the future growth of the grafted plant; in fact today in this type of grafting it is not possible to guarantee a precise positioning of the plant with respect to the cutting member of the known-type devices, which can therefore result in a poorly-effective and inaccurate carrying-out of the herbaceous graft in the above-mentioned plants.

An objective of the present invention is to overcome the above-mentioned drawbacks in the prior art, with a simple, rational and relatively inexpensive solution.

These objects are achieved by the features of the invention set out in the independent claim. The dependent claims outline preferred and/or particularly advantageous aspects of the invention.

### DISCLOSURE OF THE INVENTION

The invention in particular discloses an automatic or semi-automatic machine for herbaceous grafting of cucurbits which comprises a base supporting at least a device suitable for supporting the rootstock of a plant to be grafted, comprising a support member defining a substantially cylindrical concave portion suitable for receiving a stem of a plant to be grafted and cutting means comprising a blade suitable for cutting the stem of the plant and actuated in translation by actuating means.

According to the invention, the blade is actuated by the actuating means, with a translation motion having at least a component that is parallel to the axis of the concave portion.

Thanks to this solution, the top of the plant destined to constitute the rootstock can be easily and precisely positioned in the vicinity of the blade and cut without damaging the remaining leaves, thus being able to effectively carry out the grafting of various herbaceous plants, such as melons and the like, which in the prior art were previously cut and grafted by means of automatic machines with a lower degree of precision and graft effectiveness.

### BRIEF DESCRIPTION OF THE DRAWINGS

Further characteristics and advantages of the invention will more clearly emerge from the following description, provided by way of non-limiting example, with the aid of the figures illustrated in the appended tables.
Figure 1 is a perspective view of the automatic machine of the invention, in a first operating position.

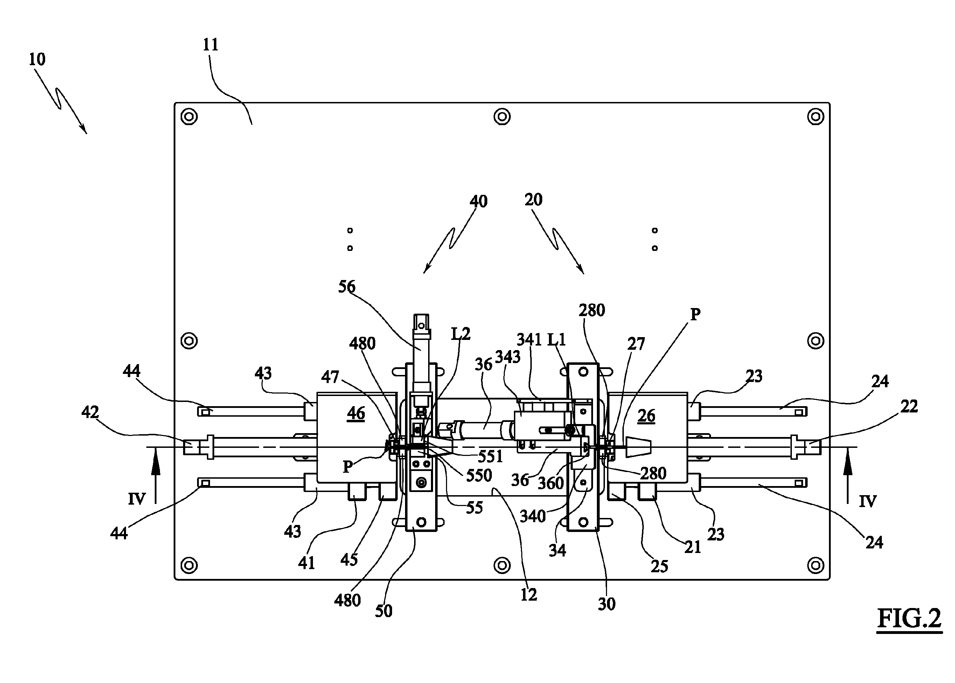

Figure 2 is a plan view of figure 1.
Figure 3 is a lateral view from III of figure 1.
Figure 4 is section IV-IV of figure 2.
Figure 5 is the machine of figure 3, in a second operating position.
Figure 6 is a detail of figure 5, shown in enlarged scale.
Figure 7 is a perspective view of figure 5.
Figure 8 is a view of a detail of figure 6 in enlarged scale.

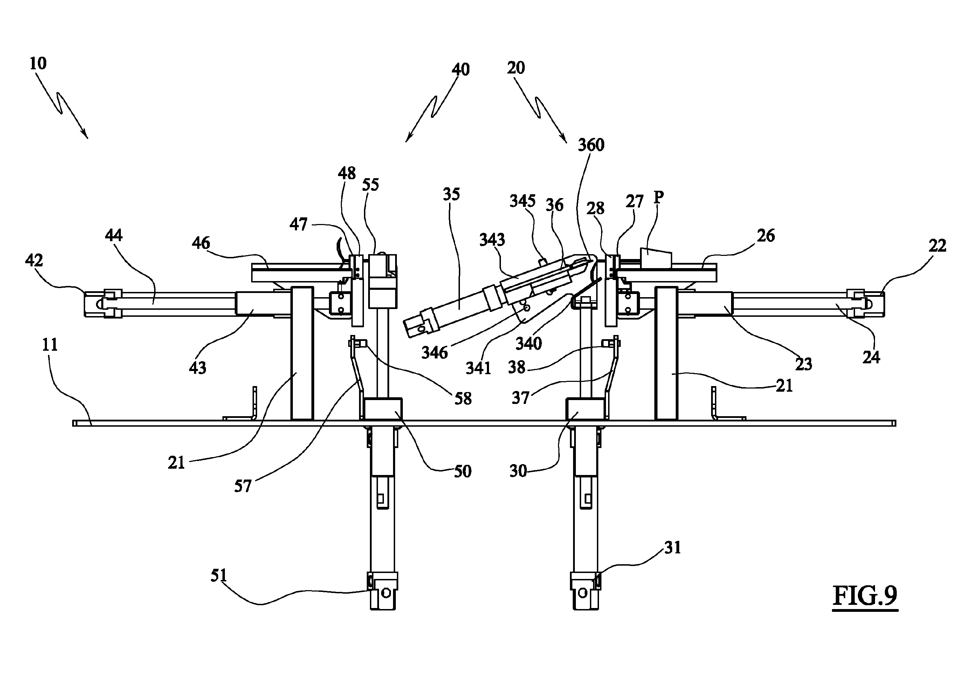

Figure 9 is the machine of figure 3, in a third operating position.
Figure 10 is the machine of figure 3, in a fourth operating position.

### BEST WAY OF CARRYING OUT THE INVENTION

With particular reference to these figures, the reference numeral 10 denotes in its entirety an automatic machine for the grafting of herbaceous cucurbits, for example for the grafting of the melon plant (denoted in the figures by the letter P) or the like, provided with two or more leaves at the top of the stem, for which the graft consists in the removal of a leaf by means of an oblique cut on the stem and the grafting of the scion at the position of the cut.

The machine 10 comprises a flat base 11 resting on the ground by means of feet, which are not shown as they are of known type.

The base 11 is provided with a central opening 12 located above a collection container, not illustrated, suitable for containing the cuttings of the plants, as will be more fully explained in the following.

On the base 11, two devices 20 and 40 are located at the sides of the opening 12, the first of which (shown on the right in the figures and denoted by reference number 20) is intended for the isolation of the rootstock from a first plant and the second (left in the figure and denoted in its entirety by the reference number 30) is destined for the isolation of the scion of a second plant to be grafted to the rootstock supported by the first device 20.

The first device 20 comprises a vertical support wall 21 which is fixed during operation of the machine 10, the relative position of which wall 21, with respect to the opening 12, being adjustable by sliding the support wall 21 in grooves afforded in the base 11 and fixing it there.

The support wall 21 supports a cylinder-piston group 22, flanked by two guide bushings 23 fixed to the vertical wall itself.

Two respective stems 24 slide in the bushings 23, which two respective stems 24 carry a first cross-member 25 located on the other side of the mobile support wall 21 with respect to the cylinder of the cylinder-piston group 22.

The first cross-member 25 is fixed to the stem of the cylinder-piston group 22.

An apron 26 made of sheet metal is fixed in a central position on the first cross member 25, which apron is conformed as a dihedron and faces upwards, and is suitable for defining a rest surface facing upwards.

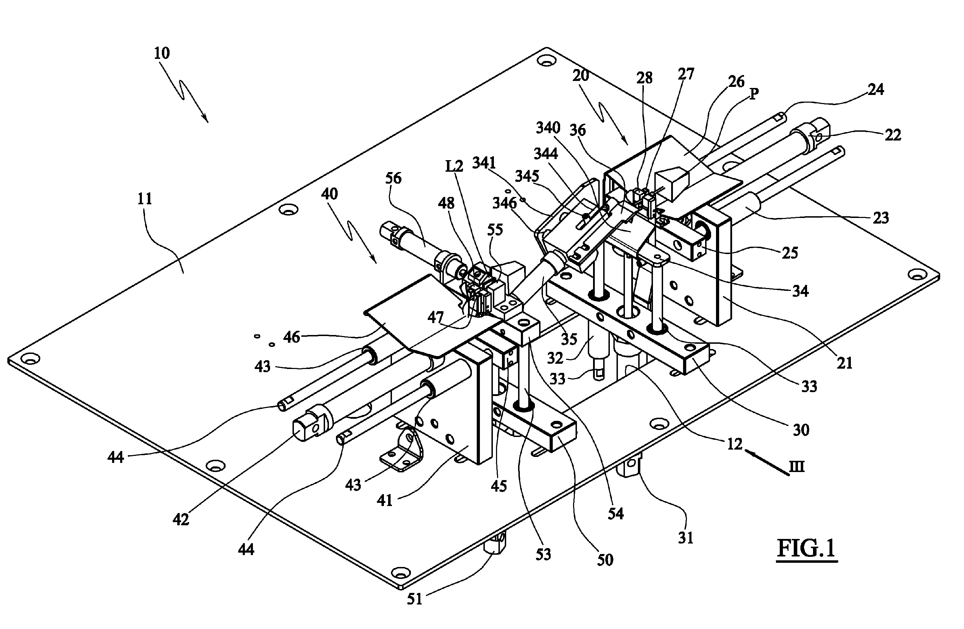

The first cross-member 25 bears a fork 27 exhibiting a concave portion, substantially cylindrical, facing upwards, (see figure 1) the axis of which is parallel to the stem of the cylinder-piston group 22 and the side walls of which are parallel and vertical.

The first cross-member 25 constitutes a means of support for a clamp 28, which is placed substantially aligned to the fork 27.

The clamp 28 is equipped with two pneumatically-operated jaws 280 that have the function of grasping and maintaining the stem of a plant to be pruned, in particular of the rootstock, during the whole process of grafting, as will be described below.

The machine 10 also comprises first cutting means (described in the following), which are also associated with the base 11 and sever the stem of the plant to be grafted, such as to realise the rootstock.

In practice, a beam 30 is fixed to the base 11 on the side of the opening 12 in front of the support wall 21, and is located at an adjustable distance from the support wall 21.

The beam 30 supports a cylinder-piston group 31 in a central position, the cylinder of which group 31 is fixed to the beam 30 (and is arranged below the plane defined by the base 11), and the rod of which, facing upwards, acts in a vertical direction above the base 11 between a lowered position, in which it is substantially entirely contained inside the cylinder, and a raised position. The beam 30 also comprises two bushes 32 with vertical axis, located at the sides of the cylinder-piston group 31, into which two stems 33 are guided, at the top of which stems a second cross-member 34 is fixed.

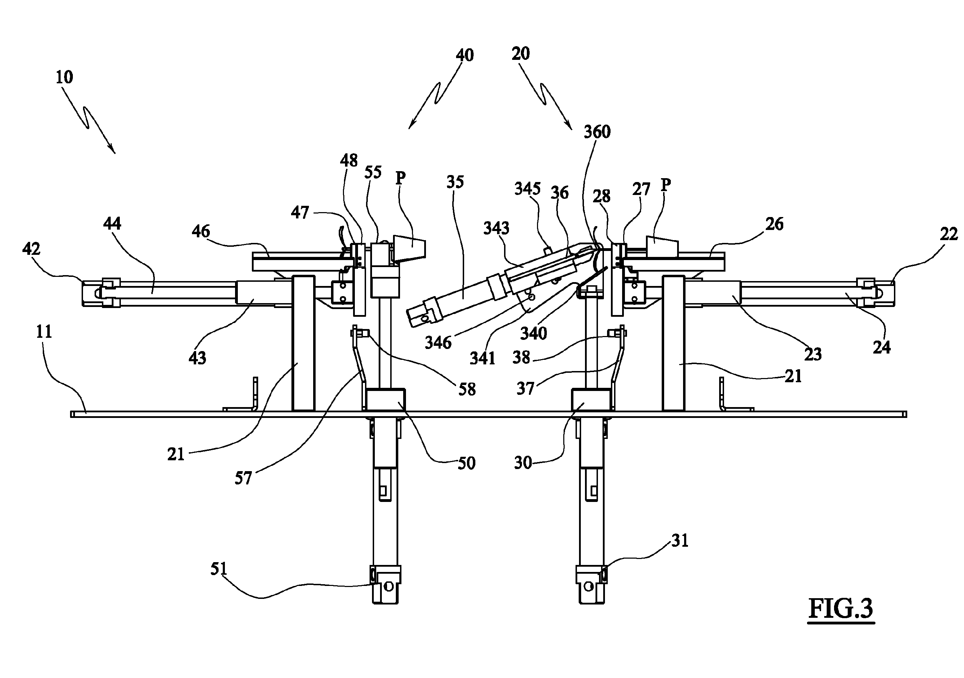

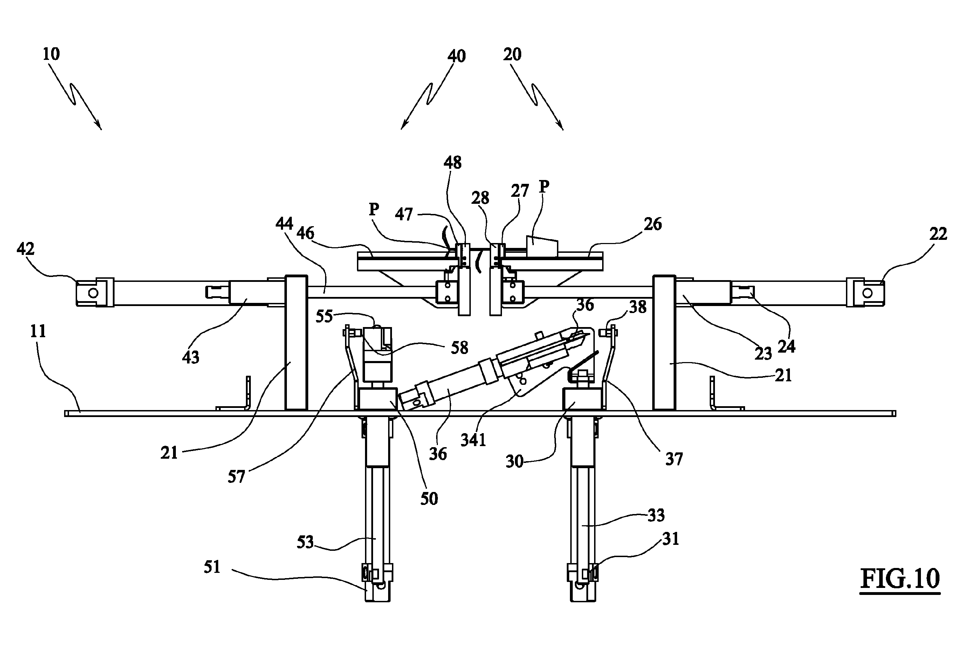

The second cross-member 34 can translate vertically, by the action of the cylinder-piston group 31, between the raised position shown in figure 3 and the lowered position illustrated in figure 10.

The second cross-member 34 comprises an L-shaped bottom wall 340 the horizontal leg of which is directly fixed to the stem of the cylinder-piston group 31, while the other leg is inclined at an acute angle with respect to the horizontal leg, thus defining a descent portion which is directed towards the opening 12 and supports a substantially vertical side wall 341.

The second cross member 34 is destined to support a linear actuator 35, for example a cylinder-piston group in which the piston is double-acting, the cylinder of which, in the present example, is fixed to the side wall 341 and the stem of which bears a cutting blade L1 located at the end of the stem (protruding from the cylinder) at the side thereof.

In particular, the stem of the linear actuator 35 is suitable for sliding inside a cylindrical cavity 342 formed in a box 343 fixed to the side wall 341.

The cylinder of the linear actuator 35 is, in turn, fixed to the box 343, which exhibits on one side (the upper side in the figure) an elongate slot 344 with an axis thereof parallel to the axis of the cylindrical cavity 342. An anti-rotation pin 345 is then fixed to the stem of the linear actuator 35, which pin 345 will slide along the slot 344 during the sliding of the stem along the cylindrical cavity 342.

In this way the blade L1 is adapted to translate substantially parallel to itself, actuated by the linear actuator 35.

The box 343 which supports the linear actuator 35 is destined to be secured to the side wall 341 with an adjustable inclination, by appropriate positioning notches 346 made in the side wall.

In particular, the box 343, and therefore the linear actuator 35, is arranged in such a way that the stem of the linear actuator actuates the blade L1 with a translation motion having at least a component that is parallel to the axis of the fork 27 and, therefore, to the stem of the plant to be cut contained therein and oriented by the same fork.

In practice, the axis of action of the stem of the linear actuator 35 lies in a vertical plane parallel to the vertical plane containing the axis of the fork 27, and is inclined with respect to the horizontal by an acute angle equal to the inclination of the sloping cut A to be made on the stem of the plant.

The cutting means of the machine 10 further comprise a positioning plate 36 attached to the second cross member 34, in particular to the box 343, which is destined to be positioned above the blade L1.

The positioning plate 36 exhibits a forward end 360, substantially pointed, which is destined to come into contact with a front end of the stem of the plant to be cut, at the same time spreading the main leaves (cotyledons) of the plant apart.

In practice, when using the machine 10, the operator places the part of the plant that is to be removed, or one of the two main leaves (cotyledons) and all the possible new leaves (suckers), above the advanced abutting end 360, and therefore can be sure that the part of interest is removed completely and precisely by the blade L1 located below the positioning plate 36.

The positioning plate 36 is thus vertically mobile with the second cross-member 34 between a raised position in which the advanced end 360 is substantially aligned with the fork 27, i.e. with the longitudinal axis of the stem of the plant contained therein, and a lowered position in which the advanced end 360 is dealigned with respect to the fork.

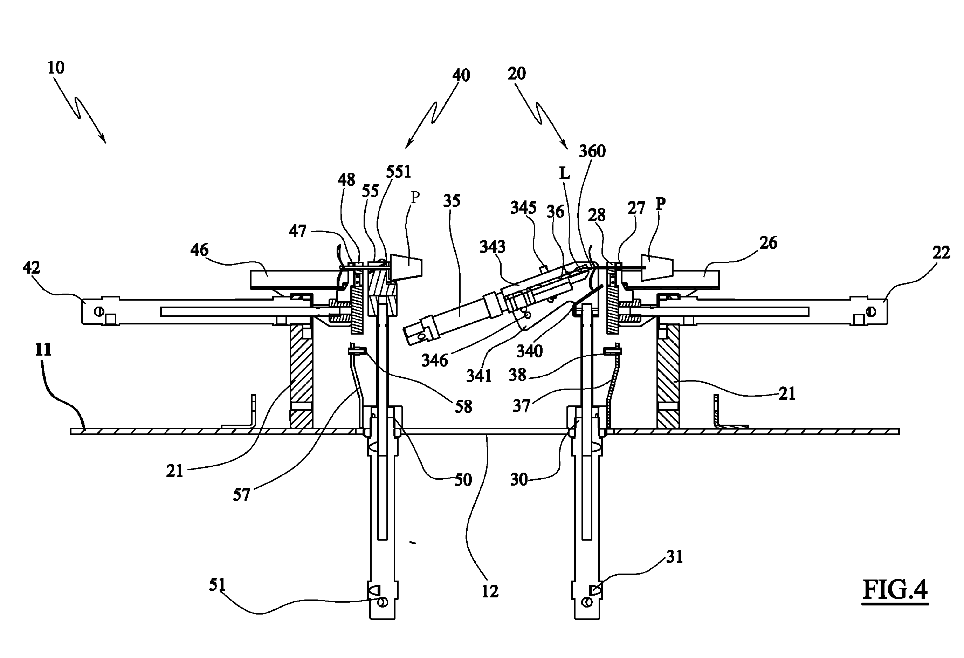

In particular, when the stem of the cylinder-piston group 22 is in the retracted position and the stem of the cylinder-piston group 31 is in the raised position, the positioning plate 36 is in the raised position with the advanced end 360 aligned with the fork 27 (the clamp 28 being interposed between the fork 27 and the advanced end 360, as shown in figures 3 and 4).

The blade L1 is in turn alternately mobile in translation, by means of the linear actuator 35, between a retracted position in which the positioning plate 36 is completely overlapped in plan view to the blade L1 and an advanced position in which they are dealigned in plan view.

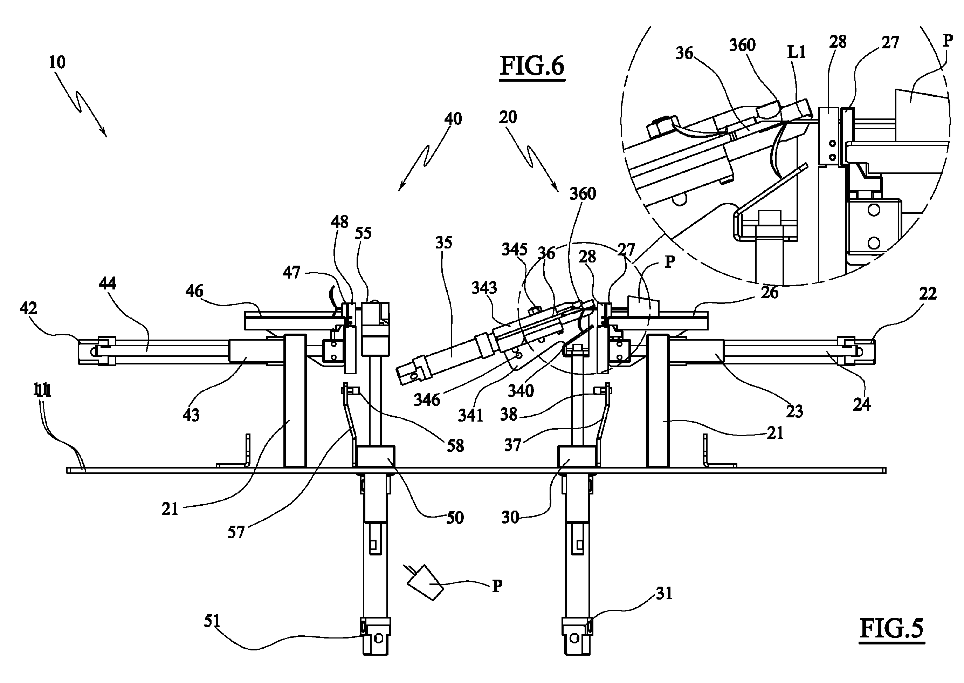

In this case, the blade L1 in the advanced position includes at least an exposed portion which is the portion of the blade L1 active in the cutting of the stem of the plant, which is such as to be arranged frontally of the advanced portion 360 of the positioning plate 36, in the advancing direction from the retracted position to the advanced position thereof, the advanced position being visible in figures 5 - 8.

In practice, the stroke of the stem of the linear actuator 35 is dimensioned so that the exposed portion of the blade L1 exceeds the advanced portion 360 by a length such as to sever the stem of the plant to be cut contained in the fork 27 (or over a length that is at least greater than the diameter of the stem of the plant).

A vertical arm 37 is fixed at the centre of the beam 30, which vertical arm 37 supports a nozzle 38 destined to be faced towards the blade L1 such as to spray on command a jet of liquid disinfectant onto the blade itself, when the second cross-member 34 is in the lowered position thereof.

The second device 40, for example, is identical to one of the devices described in patent application no. RE2011A000105 in the name of the same Applicant.

In particular, the second device 40 comprises a vertical support wall 41, which during the operation of the machine 10 is fixed, and arranged on the opposite side of the support wall 21 of the first device 20 with respect to the opening 12 of the base 11 and the position of which relative to the opening 12 can be adjusted by sliding the support wall 41 in special grooves made in the base 11 and securing it there.

The support wall 41 supports a cylinder-piston group 42, flanked by two guide bushings 43 fixed to the vertical wall.

Two respective stems 44 slide in the bushings 43 and bear a mobile first cross-member 45 placed on the other side of the support wall 41 relative to the cylinder of the cylinder-piston group 42.

The first-cross member 45 is fixed to the stem of the cylinder-piston group 42.

An apron 46 made of sheet metal is fixed to the first cross-member 45 in a central position; the apron is shaped as a dihedron facing upwards, which is destined to define an upwards-facing rest surface.

The first cross-member 45 bears a fork 47 forming a concave portion, substantially cylindrical, facing upwards, (see figure 1) the axis of which is parallel to the stem of the cylinder-piston group 42 and the lateral walls of which are parallel and vertical.

The first cross member 45 constitutes a support means for a clamp 48, which is located substantially aligned with the fork 47.

The clamp 48 is provided with two pneumatically-operated jaws 480 that have the function of grasping and holding the stem of a plant to be cut, in particular of the scion, during the whole grafting process, as will be described below.

In practice, the first device 20 and the second device 40 are symmetrical with respect to a vertical plane passing through the centre-line of the opening 12. The machine 10 further comprises second means for cutting, described herein below, associated with the base 11 and suitable for severing the stem of the plant to be grafted.

In practice, a beam 50 is fixed to the base 11 in front of the support wall 41, on the side of the opening 12, the beam 50 having an adjustable distance from the wall support 41.

The beam 50 supports, in a central position, a cylinder-piston group 51 with the stem facing upwards and acting in a vertical direction.

The beam 50 also includes two bushes 52, located at the sides of the cylinder-piston group 51, in which two stems 53 are guided, at tops of which of a vertically mobile second cross member 54 is fixed.

The second cross member 54 can translate vertically thanks to the cylinder-piston group 51 between a raised position shown in figure 3 and a lowered position illustrated in figure 10.

The second cross member 54 bears, at the centre thereof, a cradle 55, provided with an opening 550 a cross section of which is U-shaped with a concavity thereof facing upwards; in practice the cradle 55 defines a concave portion that is substantially cylindrical and has an axis that is horizontal and parallel to the axis of the stem of the cylinder-piston group 42.

In particular, when the stem of the cylinder-piston group 42 is in the retracted position and the stem of the cylinder-piston group 51 is in the extended position, the opening 550 of the cradle 55 is aligned with the clamp 48 and the fork 47, so that the clamp 48 is interposed between the cradle 55 and the fork itself (see figure 3 and figure 4).

More in detail, when the second cross member 54 is in the raised position, the walls of the opening 550 of the cradle 55 are perfectly aligned with the arms of the fork 47 and a stem of a plant to be cut can be lodged inside the cradle 55 and the fork 47 and retained by the jaws 480 of the clamp 48.

The cradle 55 has on one side thereof a slit 551 within which a blade L2 is destined to slide, the function of which is to cut the stem lodged in the cradle 55. Preferably the slit 551 has lateral sides that are parallel to one another and inclined with respect to a plane perpendicular (vertical) to the axis of the cradle 55; consequently the blade L2, destined to be inserted into the slit 551, lies on an inclined plane with respect to the plane (vertical) perpendicular to the axis of the cradle 55.

The blade L2 is actuated by a linear actuator 56, for example a cylinder group having a double-acting piston, located at a side of the cradle 55, the cylinder of which is fixed to the second cross member 54 and the rod of which carries the cutting blade L2, destined to be inserted in the cradle 55 through the slit 551 to a depth that is at least equal to the width of the cradle itself, in order to sever the stem contained in the cradle 55.

The blade L2 is moved by the linear actuator 56 along a cutting direction perpendicular to the axis of the cradle 55, or perpendicular to the longitudinal axis of the stem, so as to impart on the stem a substantially sloped cut.

For the success of the scion graft, realized by means of the device 40 (and the respective second cutting means, i.e. the blade L2), with the rootstock, realized by means of the device 20 (and the respective first cutting means, i.e. the blade L1), it is important that the inclination of the sloped cuts made in the two stems of plants have the same inclination.

To do this, the blade L1 of the first device 20 is inclined with respect to the perpendicular plane to the axis of the fork 27 (vertical) by an angle equal to the angle of inclination of the blade L2 of the other device 40 with respect to the plane perpendicular to the axis of the cradle 55 and/or of the fork 47. Finally, a vertical arm 57 is fixed at the centre of the beam 50, which arm 57 supports a nozzle 58 destined to be turned towards the blade L2 such as to spray, on command, a jet of liquid disinfectant onto the blade itself, when the second cross-member 54 is lowered.

The machine operation is described below, starting from the rest position of the machine illustrated in figure 1.

A plant P is positioned on each of the devices 20 and 40, the stem of which is to be severed for the realization of the graft, by resting thereon the root mass and/or the leaves on the apron 26, 46 and threading the stem between the arms of the fork 27, 47.

In device 40, moreover, the stem of the plant P is positioned to the whole of the opening 550 of the cradle 55.

The two plants P are both oriented in the same way, in such a way that the leaves of the plant placed in the device 20 are facing toward the root mass of the other plant located in the device 40, and are located substantially above the opening 12.

After positioning the plants P to be cut, clamps 28, 48 are actuated such that the jaws 280, 480 grasp the stem of the respective plants.

At this point, and for example contemporaneously, the cutting operation of the plant P stems is carried out by the above-described cutting means, acting at the respective devices 20 and 40.

The plant lodged in the first device 20 is cut by the blade L1 by actuating the linear actuator 35.

In practice, the cutting of the plant P lodged in the first device 20 takes place at the end of the stem of the plant that bears the leaves, in this case two leaves, such as to remove one thereof by the cutting action.

The rootstock thus realised will exhibit a sloped cut of the plant stem at the top of the plant, distal from the root mass, and at least a residual leaf attached to the stem in the vicinity of the cutting area.

By actuating the blade L2, the linear actuator 56 cuts the stem of the plant lodged in the second device 40 in an intermediate zone thereof between the leaves and the root mass, by means of a like sloped cut.

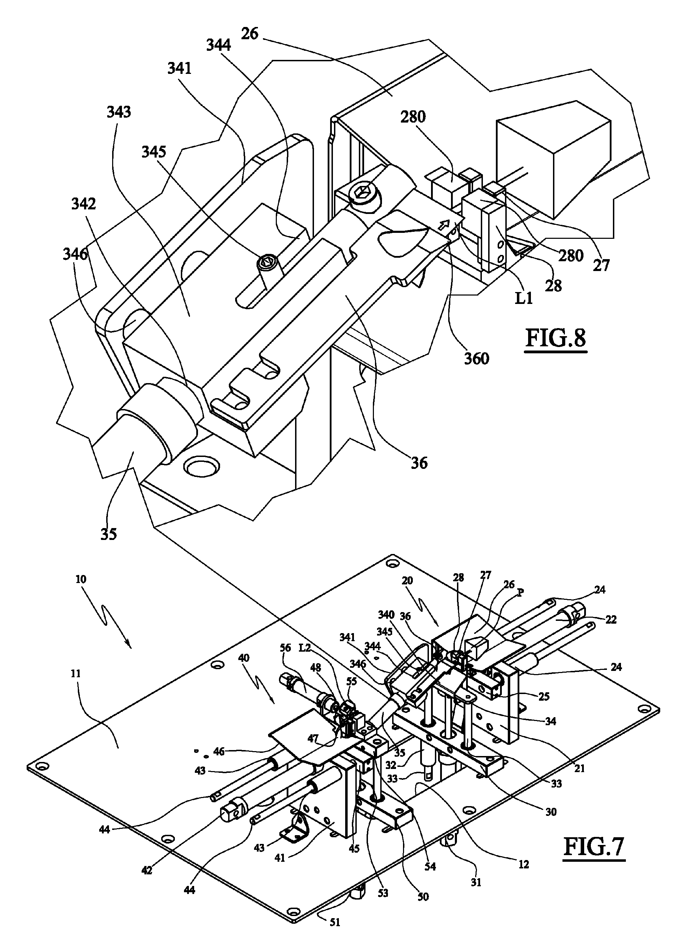

The parts cut away from the plants P, which are not retained by the clamps 28, 48, fall (as shown in figure 6 and figure 8) through the opening 12 into the underlying collection container, not shown.

After the cut, both second beams 34, 54 are lowered in order to move into the position of figure 10, while the first cross-members 25, 45 are moved towards one another, by the actuation of the respective cylinder-piston groups 22 and 42.

In this way the two sections of the of the plant stems (respectively the scion supported by the clamp 48 inside the fork 47 and the rootstock supported by the clamp 28 inside the fork 27), which are aligned, are perfectly joined, and with the attaching of a clamp (not shown) by the operator, the graft is completed.

At the moment when the second cross members 34 and 54 are located in the lowered position (non-operative) shown in figure 10, the nozzles 38 and 58 are enabled such as primarily to blow on the respective blade L1, L2 which is located in the retracted position, in order to remove any residual processing. At this point the blade L1, L2 is brought into the extracted cutting position by the respective linear actuator 35, 56, then spraying the liquid disinfectant and newly blowing air for a prolonged time.

After removal of the grafted plant the machine 10 returns to its starting configuration, illustrated in figure 1, and the cycle is repeated again.

The invention as it is conceived is susceptible to numerous modifications and variations, all falling within the inventive concept.

Moreover all details can be replaced with other technically-equivalent elements.

In practice the materials used, as well as the forms and dimensions, may be any, according to requirements, without thereby forsaking the ambit of protection of the appended claims.

## Claims

1. An automatic machine (10) for herbaceous grafting which comprises a base (11) supporting at least a device (20) suitable for supporting a rootstock of a plant (P) to be grafted, comprising a support member (27) defining a substantially cylindrical concave portion suitable for receiving a stem of a plant (P) to be grafted and cutting means comprising a blade (L1) suitable for cutting the stem of the plant (P) and actuated in translation by actuating means, **characterised in that** the blade (L1) is actuated by the actuating means (35), with a translation motion having at least a component that is parallel to the axis of the concave portion (27).

2. The machine (10) of claim 1, wherein the actuating means comprise at least a linear actuator (35), a mobile stem of which bears the blade (L1).

3. The machine (10) of claim 1, **characterised in that** the device (20) comprises a grasping clamp (28) of the plant (P) stem.

4. The machine (10) of claim 1, **characterised in that** the clamp (28) is associated to a first cross-member (25), horizontally mobile with respect to the base (11), which supports a fork (27) destined to receive the plant (P) stem and aligned with the clamp (28).

5. The machine (10) of claim 1, **characterised in that** the blade (L1) and the linear actuator (35) are associated to a second cross-member (34), vertically mobile with respect to the base (11).

6. The machine (10) of claim 5, **characterised in that** it comprises a positioning plate (36) fixed to the second cross-member (34) destined to be positioned superiorly of the blade (L1), the blade (L1) being alternately mobile in translation between a retracted position in which the positioning plate (36) is completely superposed in plan view on the blade (L1) and an advanced position in which the positioning plane (36) and the blade (L1) are dealigned in plan view.

7. The machine (10) of claim 6, **characterised in that** the positioning plate (36) exhibits an advanced end (360), destined to come into contact with an end of the stem to be cut, and is vertically mobile with the second cross-member (34) between a first raised position in which the advanced end (360) is aligned with the concave portion (27) and a lowered position in which the advanced end (360) is dealigned therefrom.

8. The machine (10) of claim 7, wherein the blade (L1) in the advanced position comprises at least an exposed portion located anteriorly of the advanced portion (360) of the positioning plate (36) in the advancement direction thereof from the retracted position to the advanced position.

9. The machine (10) of claim 1, **characterised in that** it comprises a further device (40) supported by the base (11) and destined to support a scion of a plant to be grafted to the rootstock, comprising a further support element defining a concave portion (47, 55) substantially cylindrical and suitable for receiving a stem of a further plant (P) to be grafted; further cutting means being provided comprising a second blade (L2) actuated in translation in a perpendicular direction to the axis of the respective concave portion (47, 55).

10. The machine (10) of claim 9, **characterised in that** the concave portion (55) associated to the further device (40) exhibits a lateral through-slit (550) suitable for receiving the respective blade (L2) such as to guide the blade (L2) towards the stem of the plant (P) to be cut.

11. The machine (10) of claim 9, wherein the blade (L1) of the first device (20) is inclined with respect to the perpendicular plane to the axis of the respective concave portion (27) by an angle equal to the angle of inclination of the blade (L2) of the further device (40) with respect to the perpendicular plane to the axis of the respective concave portion (47,55).
